# EUROPEAN PATENT APPLICATION

(11) **EP 1 243 879 A2**
(43) Date of publication of application: **25.09.2002**
(21) Application number: 01500250.4
(22) Date of filing: 19.10.2001
(51) Int. Cl.: F25D 13/00, B65D 88/74, F25D 17/06

(54) **System for preservation and transportation of perishable goods and similar ones in thermally isolated chambers or containers**

(30) Priority: 20.10.2000 ES 200002535
(71) Applicant: "Refrigeracion Y Acondicionamiento Pasivo S.L.", Madrid (ES)
(72) Inventor: Del Real Alcala, Hermogenes, c/o Refrig., Alcorcon C.P. 289 25, Madrid (ES)

(57) **Abstract**

System for preservation and transportation for the long life of perishable goods and similar ones in chambers and containers thermally isolated.

Characterized by the utilization of insulated leak-proof units (2) connected to a condenser with conventional compressor (3) by means of refrigerating circuit (4) that allows the invertion of the cycle of refrigeration to heating, besides, with a ventilation system (5) that increases the cooling-heating of air in a zone separated from the goods, so that afterwards it sends the air to the chamber using lower velocities to 0.25 meters/second with vent that not affect to the transmission of heat from leak-proof units by natural convection. The whole system is controlled by sensors (7) and a switchboard (8).

The applications comprises all the aspects of preservation and transportation of perishable goods and similar ones.

An alternative is the incorporation of resistances (9) to the ventilation system (5).

## Description

The present invention is based on the control properties of the passive systems of cold for the transportation and preservation of perisable products to temperatures between -22 C° and the 20 C° as it is required according to the kind of goods. This system is characterized for the utilization of insulated leak-proof units connected to a capacitor with a conventional compressor (3). And also it is characterized for supporting the main way of heat interchange, the natural convection produced between the plates and the environment, with an exchange of heat and air in a separated area from the goods and in contact with the plates, by means of convection forced by a system of ventilation. Later on this air is sent to the chamber with outset velocities, lower to 1 meter/second, being recommendable to do it at lower velocities to some 0.25 meters/second. But always taking into account that this outset velocity will depend on the configuration of the container and the goods and that the purpose is to avoid spoiling the goods and also affecting the heat transmition by natural convection.

Due to the fact that these velocities are so low the temperature of transportation can be diminished since the gradients of inside temperature is lower, In fact the majority of the products and goods can be transported at temperatures close to freezing point without the risk that the goods and product get frozen and ruined.

The system is characterized besides, because the connection of the plates to the exterior unit with the compressor (3) will be done by means of a refrigerating circuit (4) that allows to invert the cycle of cooling to be able to heat as well.

This heating system is used to compensate those situations in which cold air comes in the container and is not balanced with the "breathing heat" of the goods. This can happen because there is goods that "breath" very little or because of humidity, temperature and air speed or that does not "breath" at all. It must not be forgotten that the purpose of the system is to avoid goods breathing and consequently that they do not ripe while they are in the chamber.

An alternative is the incorporation of resistances (9) to the fans to help the heating since there are occasions in which the heat produced by the heating of the modules is not sufficient to compensate this entrance of cold before mentioned. And also it can help to a better control of the heat distribution that is obtained through the system of ventilation avoiding that the hot air, due to its low density remain exclusively in the high zone of the chamber.

### DESCRIPTION OF THE DRAWINGS.

The figure 1 shows the sectional elevation of a container with the system.
The figure 2 shows the plan view in longitudinal section of a container with the system.
The figure 3 shows a sectional elevation of the roof in lateral section of a container with the system installed in its second main way of execution.
The figure 4 shows a sectional elevation of the roof in front section of a container with the system installed in its second main way of execution.

### WAYS OF EXECUTION

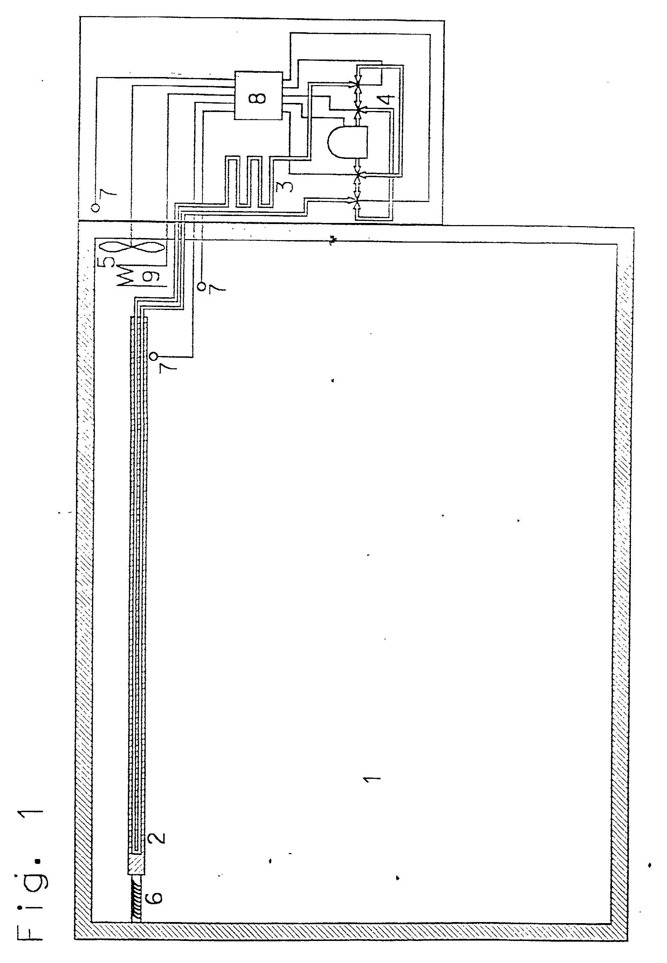

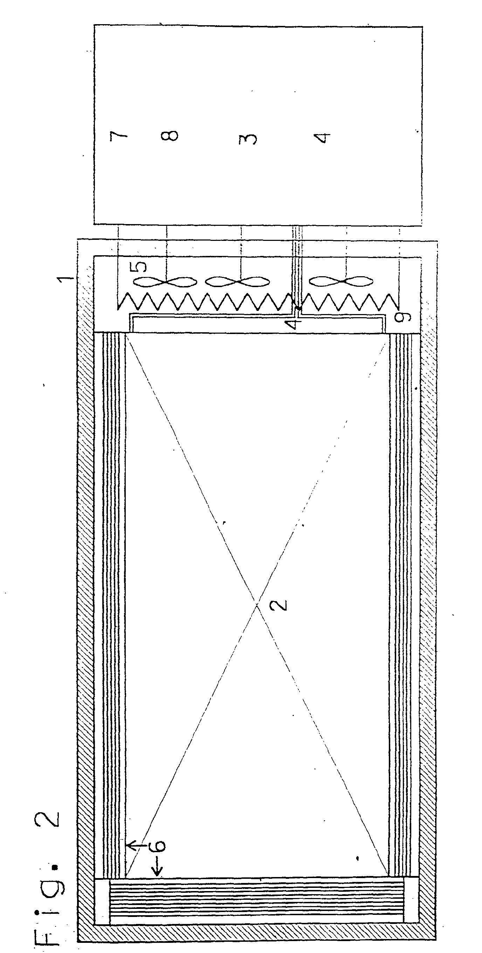

The preferential execution is the one shown in the figures 1 and 2 and is characterized for the utilization of insulated leak-proof units (2) connected to a capacitor with a conventional compressor (3). The connection is carried out by means of a refrigerating circuit (4) that allows to invert the cycle of cooling into heating. These insulated leak-proof units modules are joint to a system of ventilation (5) that increases the cooling/heating of the air in a zone separated of the goods, to later send it to the chamber:by doing that it is possible to enlarge the convection coeficient "h" substantially as high velocities will be used in this exchange zone helping the natural convection of the plates that will be the most important form of heat exchange. Later this air is sent to the chamber at low outset velocities, typically lower to 1 meter/second, being recommendable to do it to lower velocities to some 0.25 meters/second. But having always into account that this outset velocity will depend on the configuration of the container and the goods loaded in it and that the aim is to avoid spoiling the goods and also no to interfere with the transmition of heat to the leak-proof units by natural convection. The cause of these values originates in the difficulty of keeping natural convection in the areas close to the air. This natural convection will be the main form of heat transmition of heat. By this process the total refrigeration capacity of the chamber is increased without having to increase the number of insulated leak-proof units, and even can decrease the quantity of the proof units lightening the weight that we would add to the container. Besides we get round the problem of refrigerating the container before loading it, although it is always admisable to do it. In addition to this, the system becomes independent, an we can recharge leak-proof units while they are operating.

In this way we achieve to extend the most maximum time of transportation permitted by the tenant being limited now exclusively to limit that gives the ripening or conservation of the load the ones that as we already have been mentioned, with this system is very upper to the permitted with the conventional systems, and including with the systems of atmosphere controlled due to a good control that possesses the system of the present invention upon the inner temperature and humidity, including also the avoiding the proliferation of the microorganisms that could have the load. Besides thanks to that these interior velocities are so low the temperature of transportation can be diminished since the gradients of interior temperature are smaller. In fact the majority of the products can be transported in low temperatures next to the freezine point without danger that this be produced, neither that the products been burnt by the cold. All the system can be controlled by sensors (7) and a electronic switchboard (8) that controls the interior temperature of the chamber in function of the exterior temperature, the load, the temperature of the leak-proof units, the velocity of the air of the system of ventilation and the interior humidity.

With all this it is obtained a fine control of the interior temperature and humidity of the chamber controlling therefore the respiration of the product and the levels of ethylene and carbon dioxide emitted by the products.

Besides the incorporation of resistances is foreseen (9) to the fans so as to support the heating, since there are occassions in which the heating produced by the heating of the modules is not sufficient to compensate this entrance of cold before mentioned. And also by the best control of the heat distribution that will obtain through the system of ventilation avoiding that the hot air, because of its lower density remain exclusively in the high zone of the chamber.

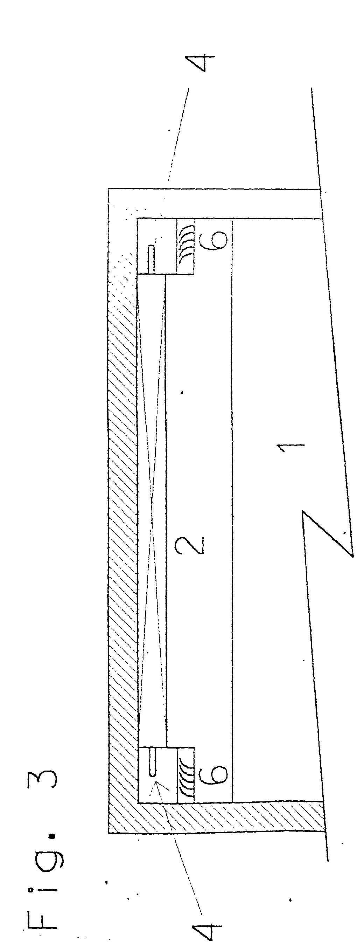

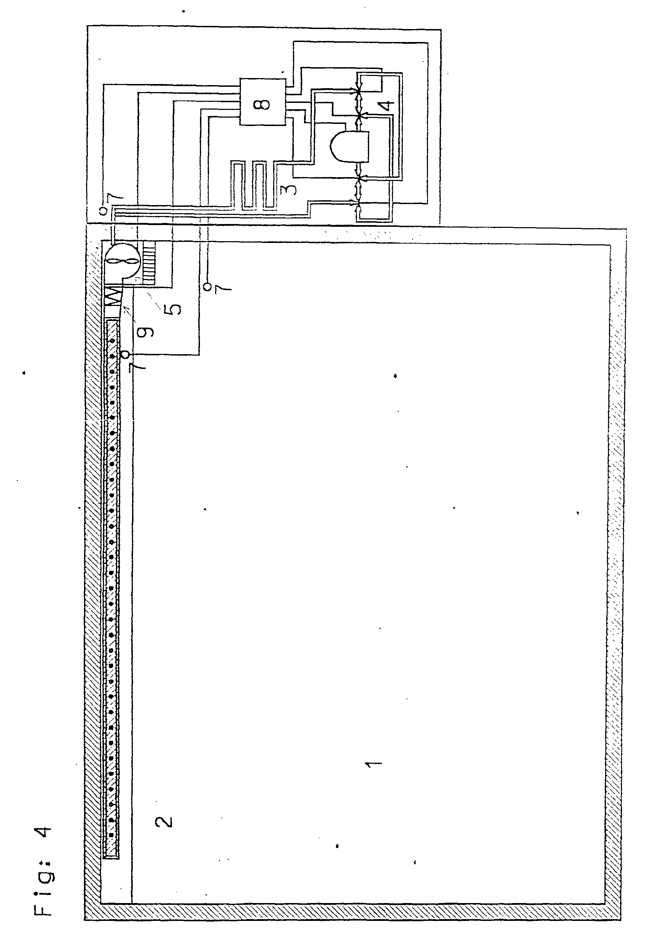

Another way of execution that is found detailed in the figures 3 and 4 is characterized for taking advantage of the lateral space between the leak-proof units (2) and the chamber (1). There are some conduits that, in lateral contact with the leak-proof units (2), will chill the air taking advantage of the support to this cooling that is produced by the pipes of the refrigerating circuit (4) that cool the modules. Since these conduits can go in the lateral of the tenant (1). The leak-proof units in this execution would go united to the roof of the chamber (1). The fans (5) would go connected to the conduits mentioned connection where they would be lodged the resistances to support the heating.

In this second way of execution the exterior refrigerating system (7,3,4,8), all the same as the placement of the interior sensors (7) will depend on the form of the tenant.

## Claims

1. A system of conservation and/or transportation for the long life of perishable products and similar ones in chambers and tenants thermally isolated **characterized by** the utilization of leak-proof units (2) connected to a condenser unit with coventional compressor (3) by means of reversible refrigerating circuit (4) that permits to heat the leak-proof units besides chilling them with the purpose of being able to heat the interior environment by means of natural convection (4). Everything controlled by sensors (7) and a switchboard (8).

2. The system of conservation and/or transportation for the long life of producing perishable and similar ones in chambers and tenants thermally isolated of the first demand **characterized** besides by having a system of ventilation (5) that force the convection of the air in a separated zone of its charge to later send it to the interior of the zone of load later in the lower velocity of such a form that does not affect to the Natural convection of the leak-proof units even they do not attack directly the load. This velocity will be typically lower to 1 meter/second, being recommendable to be lower to 0.25 meters/second depending this value of the tenant, the type of load, and the space of the chamber.

3. A system of conservation and/or transportation for the long life of perishable products and similar ones in chambers and tenants thermally isolated of the second demand **characterized** besides by having some resistances of support (9) to the heating inside the system of ventilation.

4. The system of conservation and/or transportation for the long life of perishable products and similar ones in chambers and tenants thermally isolated of the second and third demand **characterized** besides by possessing a series of sensors (7) that can control the internal parameters of the system and the load, this is interior temperatures of the plates, exterior fans, etc, pressure in the interior of the serpentine of the plates (2), fans velocity (5), power dissipated in the resistances of support (9) in the case that have them.

5. The system of the previous demand **characterized** besides by possessing a electronic switchboard -which can be programmed- (8) that controls all the parameters mentioned in the previous demand.
